# EUROPEAN PATENT SPECIFICATION

(11) **EP 3 072 948 B1**
(45) Date of publication and mention of the grant of the patent: **15.05.2019**
(21) Application number: 16159333.0
(22) Date of filing: 09.03.2016
(51) Int. Cl.: C10M 163/00

(54) **LUBRICATING OIL COMPOSITIONS FOR CONSTRUCTION MACHINES**
SCHMIERÖLZUSAMMENSETZUNGEN FÜR BAUMASCHINEN
COMPOSITIONS D'HUILE LUBRIFIANTE POUR MACHINES DE CONSTRUCTION

(30) Priority: 23.03.2015 US 201514665749
(43) Date of publication of application: 28.09.2016
(73) Proprietor: Chevron Japan Ltd., Tokyo 105-6218 (JP)
(72) Inventor: SAKAMOTO, Masanobu, Omaezaki-City, Shizuoka 437-1697 (JP); YAMAMOTO, Shuhei, Omaezaki-City, Shizuoka 437-1697 (JP)
(74) Representative: Haseltine Lake LLP

(56) References cited:
- WO-A1-00/73406
- WO-A1-02/102945
- WO-A2-02/053687
- WO-A2-02/079358
- US-A- 5 922 657

## Description

### FIELD OF THE INVENTION

The present invention generally relates to lubricating oil compositions useful for transmissions, and particularly transmission oils for construction machines.

### BACKGROUND OF THE INVENTION

Transmission oils for construction machines widely used in the world have been formulated with ZnDTP due to its multifunction in oxidation inhibition, corrosion prevention, and wear inhibition. Recent trend in downsizing the transmission to achieve better efficiency and lower cost generates a high pressure and high temperature environment in the transmission system. ZnDTP is known to decompose by reaction with water to form zinc polyphosphates, water soluble phosphate and alkyl sulfides, which is the cause of sludge formation. High pressure and high temperature environment can worsen the ZnDTP decomposition. Therefore, the presence of ZnDTP can cause clogging of the clutches under extraordinary surface pressure and high temperature conditions, which decreases friction coefficient.

The present invention relates to Zinc-free transmission oil for construction machinery. The lubricating oil composition exhibit both improved friction characteristics and extreme pressure performance even without ZnDTP.

In general, the following patent art teaches elements of the proposed invention, but none of them teach a formulation comprising a dithiophosphorylated carboxylic acid compound, a phenate detergent, a friction modifier and a sulfur-containing wear inhibitor in Zinc-free transmission oils.

US patent number US 6225266 teaches a Zinc-free lubricant composition for lubricating a continuously variable transmission, which comprises a mixture of a major amount of a lubricating oil and an effective amount of a performance enhancing additive combination comprising: (a) an ashless dispersant; (b) at least one organic phosphite; (c) a calcium detergent; (d) one or more friction modifiers selected from the group consisting of: succinimides and ethoxylated amines; and (e) a primary amide of a long chain carboxylic acid.

US patent number 6337309 teaches a zinc-free lubricating composition for lubricating a continuously variable transmission which comprises a mixture of a major amount of a lubricating oil and an effective amount of a performance enhancing additive combination comprising: (a) an ashless polyisobutenyl succinimide dispersant; (b) at least one organic thioether phosphite; (c) a calcium phenate overbased detergent at a concentration such that the total amount of calcium in the fluid is less than about 500 ppm; (d) friction modifiers comprising one or more succinimides and one or more ethoxylated amines; and (e) a primary amide of a long chain carboxylic acid.

WO-A-02/053687 teaches a zinc-free lubricating composition for machine elements, which comprises a base oil, (a) beta-dithiophosphorylated propionic acid and (b) triaryl phosphate.

US patent application number US20060276352 teaches a a lubricating composition containing (a) an oil soluble phosphorus amine salt; (b) about 0.0001 wt % to about 0.5 wt % of a metal containing detergent package comprising a phenate and a sulphonate; (c) a dispersant; (d) a dispersant viscosity modifier; (e) a metal deactivator; and (f) an oil of lubricating viscosity, wherein the lubricating composition contains less than about 0.25 wt % of a metal dialkyldithiophosphate.

US patent application number US20060264340 teaches a method of lubricating a dual clutch transmission employing a plurality of wet clutches by a lubricating fluid include a base oil, a succinimide dispersant, a succinimide friction modifier, and a phosphonate.

US patent number US6756346 teaches a lubricating oil composition comprising (I) 100 pbw of a base oil, (II) an antiwear agent comprising (i) from 0.05 to 10 pbw of a phosphorothionate and from 0.01 to 1.0 pbw of an amine salt of phosphorus compound and/or (ii) from 0.05 to 10 pbw of a dithiophosphate, and (III) a rust preventing agent comprising from 0.01 to 1.0 pbw of an amide obtained by reacting a polyalkylene polyamine and a carboxylic acid having from 4 to 30 carbon atoms, and the use of such lubricating composition.

US patent number US5942470 teaches gear oil and gear oil additive concentrates of enhanced positraction performance, which comprise: (i) at least one oil-soluble sulfur-containing extreme pressure or antiwear agent; (ii) at least one oil-soluble amine salt of a partial ester of an acid of phosphorus; and (iii) at least one oil-soluble succinimide of specific structure. These compositions preferably contain one or more of the following additional components: (iv) at least one amine salt of a carboxylic acid; (v) at least one nitrogen-containing ashless dispersant; and (vi) at least one trihydrocarbyl ester of a pentavalent acid of phosphorus.

US patent application number US20100152078 teaches a lubricating oil composition comprising a sulfurized neopentyl glycol phosphate, a substituted succinimide, a reaction product of an alkyl dicarboxylic acid or anhydride and ammonia, a fatty amine ethoxylate, an oleamide, and dodecyl succinic acid.

European patent number EP1055722 teaches an oil composition for non-stage transmissions which is obtained by incorporating (b) a polymethacrylate, (c) the phenate or a sulfonate of an alkaline earth metal, (d) an imide compound, (e) an (alkyl)phenyl (thio)phosphate, (f) zinc dithiophosphate, and (g) a fatty acid amide compound into (a) a lube base oil.

US patent number US6534451 teaches a power transmission fluid composition comprising an ashless dispersant, a friction modifier, an antioxidant, a viscosity modifier and an antiwear agent which is the product formed by reacting elemental sulfur and a dialkylphosphite.

European patent number EP0769546 teaches a lubricating oil composition comprising a boron containing overbased material, a phosphorus compound, a borated friction modifier, a thiocarbamate and a dispersant viscosity modifier.

US patent application number US20040192562 teaches a lubricating oil composition which comprises calcium salicylate having a base number of 50 to 300 mgKOH/g in an amount of 0.005 to 0.07 percent by mass in terms of calcium, an SP type extreme pressure additive in an amount of 0.005 to 0.07 percent by mass in terms of phosphorous, one or more compounds selected from the group consisting of specific succinimide compounds below in an amount of 0.1 to 6 percent by mass, and a boron-containing ashless dispersant in an amount of 0.001 to 0. 05 percent by mass in terms of boron, based on the total mass of the composition.

US patent application number US2014162919 teaches a lubricant composition for a full transmission system, comprising an ashless dispersant; a friction modifier; a phosphorus-containing antiwear agent; an antirust additive; a sulfur-containing extreme-pressure additive; a metal deactivation additive; a viscosity index improver; and a pour-point depressant.

It is therefore desirable for a Zinc-free transmission oil for construction machinery. The present invention is directed to a Zinc-free transmission lubricating oil composition which exhibit both improved friction characteristics and extreme pressure performance even without ZnDTP.

### SUMMARY OF THE INVENTION

In accordance with one embodiment of the present invention, there is provided a zinc-free transmission oil composition for construction machinery as defined in and by the appended claims.

Also provided is a method for lubricating the transmission of a construction machine comprising lubricating the transmission with a Zinc-free transmission oil composition as defined in and by the appended claims.

### Definitions:

The following terms will be used throughout the specification and will have the following meanings unless otherwise indicated.

The term "a major amount" of a base oil refers to an amount of the base oil more than 50 wt.%, more than 60 wt.%, more than 70 wt.%, more than 80 wt.%, or more than 90 wt.% of the lubricating oil composition.

The term "Total Base Number" or "TBN" refers to the level of alkalinity in an oil sample, which indicates the ability of the composition to continue to neutralize corrosive acids, in accordance with ASTM Standard No. D2896 or equivalent procedure. The test measures the change in electrical conductivity, and the results are expressed as mgKOH/g (the equivalent number of milligrams of KOH needed to neutralize 1 gram of a product). Therefore, a high TTBN reflects strongly overbased products and, as a result, a higher base reserve for neutralizing acids.

The term "construction machines" refers to off-road heavy duty vehicles including but not limited to excavator, dozers, loaders, chip spreaders, pavers, compactors, cranes.

PIB is polyisobutylene.

PIBSA is polyisobutylene succinic anhydride.

HPA is heavy polyamine.

DETA is Diethylenetriamine.

TEPA is Triethylenepentaamine.

### DETAILED DESCRIPTION OF THE INVENTION

In accordance with one embodiment of the present invention, there is provided a Zinc-free transmission oil composition for construction machinery as defined in and by the appended claims.

Also provided is a method for lubricating the transmission of a construction machine comprising lubricating the transmission with a zinc-free transmission oil composition as defined in and by the appended claims.

### Dispersant

In one embodiment, the lubricating oil composition disclosed herein comprises a dispersant systemthat can prevent sludge, varnish, and other deposits by keeping particles suspended in a colloidal state. Any dispersant known by a person of ordinary skill in the art may be used in the lubricating oil composition, . In one embodiment, the lubricating oil composition containing a dispersant system comprising one or more basic nitrogen-containing ashless dispersants. Nitrogen-containing basic ashless (metal-free) dispersants contribute to the base number or TBN (as can be measured by ASTM D 2896) of a lubricating oil composition to which they are added, neutralizing acidic and oxidation byproducts without introducing additional sulfated ash. Basic nitrogen-containing ashless dispersants useful in this invention include hydrocarbyl succinimides; hydrocarbyl succinamides; mixed ester/amides of hydrocarbyl-substituted succinic acids formed by reacting a hydrocarbyl-substituted succinic acylating agent stepwise or with a mixture of alcohols and amines, and/or with amino alcohols; Mannich condensation products of hydrocarbyl-substituted phenols, formaldehyde and polyamines; and amine dispersants formed by reacting high molecular weight aliphatic or alicyclic halides with amines, such as polyalkylene polyamines. Mixtures of such dispersants can also be used.

Representative examples of ashless dispersants include, but are not limited to, amines, alcohols, amides, or ester polar moieties attached to the polymer backbones via bridging groups. An ashless dispersant of the present invention may be, for example, selected from oil soluble salts, esters, amino-esters, amides, imides, and oxazolines of long chain hydrocarbon substituted mono and dicarboxylic acids or their anhydrides; thiocarboxylate derivatives of long chain hydrocarbons, long chain aliphatic hydrocarbons having a polyamine attached directly thereto; and Mannich condensation products formed by condensing a long chain substituted phenol with formaldehyde and polyalkylene polyamine.

Carboxylic dispersants are reaction products of carboxylic acylating agents (acids, anhydrides, esters, etc.) comprising at least about 34 and preferably at least about 54 carbon atoms with nitrogen containing compounds (such as amines), organic hydroxy compounds (such as aliphatic compounds including monohydric and polyhydric alcohols, or aromatic compounds including phenols and naphthols), and/or basic inorganic materials. These reaction products include imides, amides, and esters.

Succinimide dispersants are a type of carboxylic dispersant. Mono and bis alkenyl succinimides are usually derived from the reaction of alkenyl succinic acid or anhydride and alkylene polyamines. These compounds are generally considered to have the formula (I): 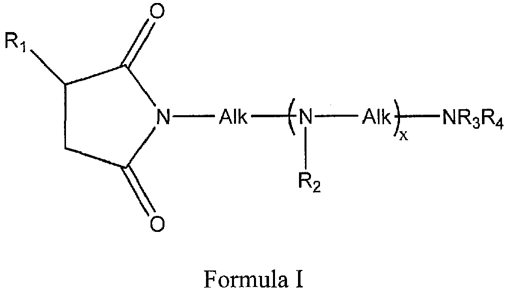 wherein R₁ is a substantially hydrocarbon radical having a molecular weight from about 450 to 3000, that is, R₁ is a hydrocarbyl radical, preferably an alkenyl radical, containing about 30 to about 200 carbon atoms; Alk is an alkylene radical of 2 to 10, preferably 2 to 6, carbon atoms, R₂, R₃, and R₄ are selected from a C₁-C₄ alkyl or alkoxy or hydrogen, preferably hydrogen, and x is an integer from 0 to 10, preferably 0 to 3;
or formula (II): 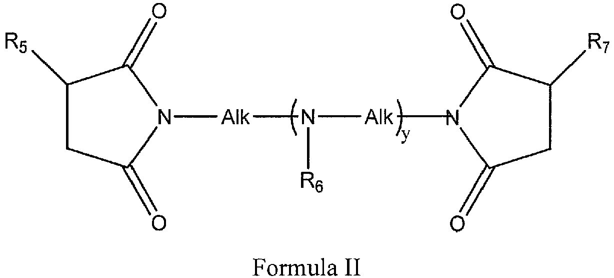 wherein R₅ and R₇ are both substantially hydrocarbon radical having a molecular weight from about 450 to 3000, that is, R₅ and R₇ are hydrocarbyl radical, preferably an alkenyl radical, containing about 30 to about 200 carbon atoms; Alk is an alkylene radical of 2 to 10, preferably 2 to 6, carbon atoms, R₆ is selected from a C₁-C₄ alkyl or alkoxy or hydrogen, preferably hydrogen, and y is an integer from 0 to 10, preferably 0 to 3. In one embodiment, R₁, R₅ and R₇ are polyisobutyl groups.

In one embodiment, the actual reaction product of alkylene or alkenylene succinic acid or anhydride and alkylene polyamine will comprise the mixture of compounds including monosuccinimides and bissuccinimides. The mono alkenyl succinimide and bis alkenyl succinimide produced may depend on the charge mole ratio of polyamine to succinic groups and the particular polyamine used. Charge mole ratios of polyamine to succinic groups of about 1:1 may produce predominantly mono alkenyl succinimide. Charge mole ratios of polyamine to succinic group of about 1:2 may produce predominantly bis alkenyl succinimide. Examples of succinimide dispersants include those described in, for example, U.S. Patent Nos. 3,172,892, 4,234,435 and 6,165,235,

In one embodiment, the polyalkenes from which the substituent groups are derived are typically homopolymers and interpolymers of polymerizable olefin monomers of 2 to about 16 carbon atoms, and usually 2 to 6 carbon atoms. The amines which are reacted with the succinic acylating agents to form the carboxylic dispersant composition can be monoamines or polyamines.

In a preferred aspect, the alkenyl succinimide may be prepared by reacting a polyalkylene succinic anhydride with an alkylene polyamine. The polyalkylene succinic anhydride is the reaction product of a polyalkylene (preferably polyisobutene) with maleic anhydride. One can use conventional polyisobutene, or high methylvinylidene polyisobutene in the preparation of such polyalkylene succinic anhydrides. One can use thermal, chlorination, free radical, acid catalyzed, or any other process in this preparation. Examples of suitable polyalkylene succinic anhydrides are thermal PIBSA (polyisobutenyl succinic anhydride) described in U.S. Pat. No. 3,361,673; chlorination PIBSA described in U.S. Pat. No. 3,172,892; a mixture of thermal and chlorination PIBSA described in U.S. Pat. No. 3,912,764; high succinic ratio PIBSA described in U.S. Pat. No. 4,234,435; PolyPIBSA described in U.S. Pat. Nos. 5,112,507 and 5,175,225; high succinic ratio PolyPIBSA described in U.S. Pat. Nos. 5,565,528 and 5,616,668; free radical PIBSA described in U.S. Pat. Nos. 5,286,799, 5,319,030, and 5,625,004; PIBSA made from high methylvinylidene polybutene described in U.S. Pat. Nos. 4,152,499, 5,137,978, and 5,137,980; high succinic ratio PIBSA made from high methylvinylidene polybutene described in European Patent Application Publication No. EP 355 895; terpolymer PIBSA described in U.S. Pat. No. 5,792,729; sulfonic acid PIBSA described in U.S. Pat. No. 5,777,025 and European Patent Application Publication No. EP 542 380; and purified PIBSA described in U.S. Pat. No. 5,523,417 and European Patent Application Publication No. EP 602 863. The polyalkylene succinic anhydride is preferably a polyisobutenyl succinic anhydride. In one preferred embodiment, the polyalkylene succinic anhydride is a polyisobutenyl succinic anhydride having a number average molecular weight of at least 450, more preferably at least 900 to about 3000 and still more preferably from at least about 900 to about 2300.

The preferred polyalkylene amines used to prepare the succinimides are of the formula (III): 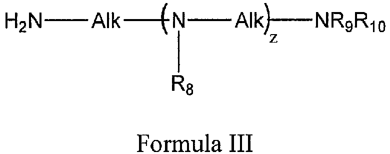 wherein z is an integer of from 0 to 10 and Alk is an alkylene radical of 2 to 10, preferably 2 to 6, carbon atoms, , R₈, R₉, and R₁₀ are as are selected from a C₁-C₄ alkyl or alkoxy or hydrogen, preferably hydrogen, and z is an integer from 0 to 10, preferably 0 to 3.

The alkylene amines include principally methylene amines, ethylene amines, butylene amines, propylene amines, pentylene amines, hexylene amines, heptylene amines, octylene amines, other polymethylene amines and also the cyclic and the higher homologs of such amines as piperazine and amino alkyl-substituted piperazines. They are exemplified specifically by ethylene diamine, triethylene tetraamine, propylene diamine, decamethyl diamine, octamethylene diamine, diheptamethylene triamine, tripropylene tetraamine, tetraethylene pentamine, trimethylene diamine, pentaethylene hexamine, ditrimethylene triamine, 2-heptyl-3-(2-aminopropyl)-imidazoline, 4-methyl imidazoline, N,N-dimethyl-1,3-propane diamine, 1,3-bis(2-aminoethyl)imidazoline, 1-(2-aminopropyl)-piperazine, 1,4-bis(2-aminoethyl)piperazine and 2-methyl-1-(2-aminobutyl)piperazine. Higher homologs such as are obtained by condensing two or more of the above-illustrated alkylene amines likewise are useful.

The ethylene amines are especially useful. They are described in some detail under the heading "Ethylene Amines" in Encyclopedia of Chemical Technology, Kirk-Othmer, Vol. 5, pp. 898-905 (Interscience Publishers, New York, 1950). The term "ethylene amine" is used in a generic sense to denote a class of polyamines conforming for the most part to the formula (IV):

H₂N(CH₂CH₂NH)_{α}H Formula IV

wherein α is an integer from 1 to 10. Thus, it includes, for example, ethylene diamine, diethylene triamine, triethylene tetraamine, tetraethylene pentamine, pentaethylene hexamine, and the like.

The individual alkenyl succinimides used in the alkenyl succinimide composition of the present invention can be prepared by conventional processes, such as disclosed in U.S. Pat. Nos. 2,992,708; 3,018,250; 3,018,291; 3,024,237; 3,100,673; 3,172,892; 3,202,678; 3,219,666; 3,272,746; 3,361,673; 3,381,022; 3,912,764; 4,234,435; 4,612,132; 4,747,965; 5,112,507; 5,241,003; 5,266,186; 5,286,799; 5,319,030; 5,334,321; 5,356,552; 5,716,912,

Also included within the term "alkenyl succinimides" are post-treated succinimides such as post-treatment processes involving borate or ethylene carbonate disclosed by Wollenberg, et al., U.S. Pat. No. 4,612,132; Wollenberg, et al., U.S. Pat. No. 4,746,446; and the like as well as other post-treatment processes Preferably, the carbonate-treated alkenyl succinimide is a polybutene succinimide derived from polybutenes having a molecular weight of 450 to 3000, preferably from 900 to 2500, more preferably from 1300 to 2300, and preferably from 2000 to 2400, as well as mixtures of these molecular weights. Preferably, it is prepared by reacting, under reactive conditions, a mixture of a polybutene succinic acid derivative, an unsaturated acidic reagent copolymer of an unsaturated acidic reagent and an olefin, and a polyamine, such as taught in U.S. Pat. No. 5,716,912

In one embodiment, the dispersant system comprises from 0.1 to 20 wt.%, preferably 0.1 - 15 wt. %, preferably 0.1 - 12 wt. %, preferably 0.1 - 8 wt. %, preferably 0.1 - 5 wt. %, preferably 0.25 - 8 wt. %, preferably 0.25 - 5 wt. %, preferably 0.25 - 3 wt. %, preferably 0.5 - 8 wt. %, preferably 0.5 - 5 wt. %, and preferably 0.5 - 3 wt. %, of the weight of the lubricating oil composition.

### Dithiophosphorylated carboxylic acid

In one embodiment, the lubricating oil composition disclosed herein comprise a dithiophosphorylated carboxylic acid compound represented by the formula V: 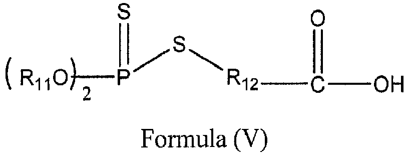 In formula (V), R₁₁ is hydrocarbyl selected from straight and branched chain alkyl, cycloalkyl andalkylphenyl. Preferred substituents for R₁₁ are independently selected from alkyl from 3 to 10 carbon atoms, such as propyl, isopropyl, butyl, isobutyl, tert-butyl, pentyl, isopentyl, hexyl, 2-ethylbutyl, 1-methylpentyl, 1,3 dimethylbutyl, 2 ethylhexyl, and the like, cycloalkyl from 5 to 7 carbon atoms, such as cyclopentyl, cyclohexyl, cycloheptyl, and alkylphenyl with alkyl groups from 1-30 carbon atoms . Particularly preferred groups for R₁₁ are mixtures of the foregoing. In another embodiment,preferred alkyl groups for R₁₁ are selected from isopropyl, isobutyl and 2-ethylhexyl. R₁₂ is selected from the group consisting of alkylene of 1 - 10 carbon atoms, such as ethylene, n-propylene, isopropylene, n-butylene, isobutylene and sec-butylene. More preferred is isopropylene.

In another embodiment, the dithiophosphorylated carboxylic acid is a 3-dithiophosphoryl-2-methylpropionic acid, such as 3-[[bis(2-methylpropoxy)phosphinothioyl]thio]-2-methylpropanoic acid having the structure in Formula VI below:

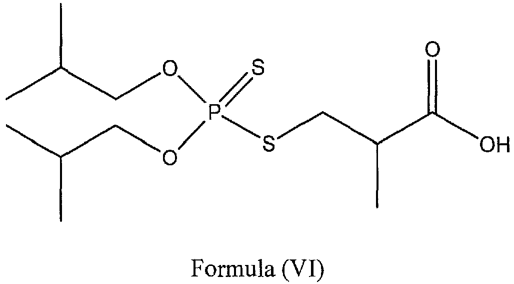

The compound of Formula VI is commercially available and marketed under the trademark IRGALUBE® 353.

The concentration of the dithiophosphorylated carboxylic acid in the lubricating oil composition disclosed herein is at least about 0.01 wt. %. In one embodiment, the amount of the dithiophosphorylated carboxylic acid in the lubricating oil compositions disclosed herein is about 0.01 to 2 wt. % based on the total weight of the lubricating oil composition. In one embodiment, the amount of the dithiophosphorylated carboxylic acid in the lubricating oil compositions is 0.01 to 1 wt. %. In one embodiment, the amount of the dithiophosphorylated carboxylic acid in the lubricating oil compositions is 0.01 to 0.75 wt. %. In one embodiment, the amount of the dithiophosphorylated carboxylic acid in the lubricating oil compositions is 0.01 to 0.5 wt. %. In one embodiment, the amount of the dithiophosphorylated carboxylic acid in the lubricating oil compositions is 0.02 to 2 wt. %. In one embodiment, the amount of the dithiophosphorylated carboxylic acid in the lubricating oil compositions is 0.025 to 2 wt. %. According to the invention, the amount of the dithiophosphorylated carboxylic acid in the lubricating oil compositions is 0.025 to 1 wt. %. In one embodiment, the amount of the dithiophosphorylated carboxylic acid in the lubricating oil compositions is 0.05 to 1 wt. %. In one embodiment, the amount of the dithiophosphorylated carboxylic acid in the lubricating oil compositions is 0.05 to 0.5 wt. %.

### Friction modifier

Friction modifiers act to either increase or decrease friction at the boundary between surfaces that are moving relative to one another. Organic friction modifiers do not contain metals, such as are found in metallo-organic compounds such as molybdenum dithiocarbamates.

The lubricating oil compositions disclosed herein comprise a friction modifier that can lower the friction between moving parts. Non-limiting examples of suitable friction modifiers include fatty carboxylic acids; derivatives (e.g., alcohol, esters, borated esters, amides, metal salts and the like) of fatty carboxylic acid; mono-, di- or tri-alkyl substituted phosphoric acids or phosphonic acids; derivatives (e.g., esters, amides, metal salts and the like) of mono-, di- or tri-alkyl substituted phosphoric acids or phosphonic acids; mono-, di- or trialkyl substituted amines; mono- or di-alkyl substituted amides and combinations thereof. In some embodiments, the friction modifier is selected from the group consisting of aliphatic amines, ethoxylated aliphatic amines, aliphatic carboxylic acid amides, ethoxylated aliphatic ether amines, aliphatic carboxylic acids, glycerol esters, aliphatic carboxylic ester-amides, fatty imidazolines, fatty tertiary amines, wherein the aliphatic or fatty group contains more than about eight carbon atoms so as to render the compound suitably oil soluble. In other embodiments, the friction modifier comprises an aliphatic substituted succinimide formed by reacting an aliphatic succinic acid or anhydride with ammonia or a primary amine. The amount of the friction modifier may vary from about 0.01 wt. % to about 10 wt. %, from about 0.05 wt. % to about 5 wt. %, or from about 0.1 wt. % to about 3 wt. %, based on the total weight of the lubricating oil composition. Some suitable friction modifiers have been described in Mortier et al., "Chemistry and Technology of Lubricants ," 2nd Edition, London, Springer, Chapter 6, pages 183-187 (1996); and Leslie R. Rudnick, "Lubricant Additives: Chemistry and Applications," New York, Marcel Dekker, Chapters 6 and 7, pages 171-222 (2003),

In one embodiment of the present invention, the organic friction modifier is selected from the group consisting of fatty acid amides and alkane diols. According to the invention, the organic friction modifier is a fatty acid amide. In another embodiment, the fatty acid amide is oleyl amide.

In one embodiment, the concentration of the one or more friction modifiers within the lubricating oil composition on an actives basis is about 0.01 to 2 wt. %. In another embodiment, the concentration of the one or more friction modifiers is from 0.02 to 1.5 wt. %. In another embodiment, the concentration of the one or more friction modifiers is from 0.02 to 1.0 wt. %. In another embodiment, the concentration of the one or more friction modifiers is from 0.03 to 1 wt. In another embodiment, the concentration of the one or more friction modifiers is from 0.04 to 0.75 wt. %. In another embodiment, the concentration of the one or more friction modifiers is from 0.04 to 0.5 wt. %. In another embodiment, the concentration of the one or more friction modifiers is from 0.04 to 0.4 wt. %. In another embodiment, the concentration of the one or more friction modifiers is from 0.05 to 0.3 wt. %. In another embodiment, the concentration of the one or more friction modifiers is from 0.05 to 0.2 wt. %. In another embodiment, the concentration of the one or more friction modifiers is from 0.05 to 0.1 wt. %.

### Phenate Detergent

In one embodiment of the present invention, the lubricating oil additive composition comprises at least a phenate detergent. The phenate detergent can be an overbased or non-overbased detergent.

Typically, the phenate detergent may be prepared according to the processes that are described in U.S. Pat. No. 3,801,507, and in U.S. Pat. No. 5,677,270

The process of preparing the phenate detergent can be conveniently conducted by contacting the desired alkylphenol with sulfur in the presence of a lower alkanoic acid and metal base under reactive conditions, preferably in an inert-compatible liquid hydrocarbon diluent. Preferably the reaction is conducted under an inert gas, typically nitrogen. In theory the neutralization can be conducted as a separate step prior to sulfurization, but pragmatically it is generally more convenient to conduct the sulfurization and the neutralization together in a single process step. Also, in place of the lower alkanoic acid, salts of the alkanoic acids or mixtures of the acids and salts could also be used. Where salts or mixtures of salts and acids are used, the salt is preferably an alkaline earth metal salt and most preferably a calcium salt. However, in general the acids are preferred and accordingly the process will be described below with respect to the use of lower alkanoic acid; however, it should be appreciated that the teachings are also applicable to the use of salts and mixtures of salts in place of all or a portion of the acids.

The combined neutralization and sulfurization reaction is typically conducted at temperatures in the range of about from 115° C. to 300° C., preferably 135° C. to 230° C. depending on the particular metal and alkanoic acid used. Where formic acid is used alone, we have found that best results are generally obtained by using temperatures in the range of about from 150° C. to 200° C. By using formic acid with other alkanoic acids (acetic, propionic, or acetic/propionic), one can advantageously use the higher reaction temperatures and obtain higher base retention and reduced piston deposits. For example, with these mixtures, one can use temperatures in the range of about from 180° C. to 250° C. and especially at temperatures of about from 200° C. to 235° C.

Mixtures of two or all three of the lower alkanoic acids also can be used. Mixtures containing about from 5 to 25 wt % formic acid and about from 75 to 95 wt % acetic acid are especially advantageous where normal or moderately overbased products are desired. Based on one mole of alkylphenol, typically from 0.8 to 3.5, preferably from 1.2 to 2, moles of sulfur and about 0.025 to 2, preferably 0.1 to 0.8, moles of lower alkanoic acid are used. Typically about 0.3 to 1 mole, preferably 0.5 to 0.8 mole, of metal base are employed per mole of alkylphenol.

In addition an amount of metal base sufficient to neutralize the lower alkanoic acid is also used. Thus overall, typically about from 0.3 to 2 moles of metal base are used per mole of alkylphenol, including the base required to neutralize the lower alkanoic acid. If preferred, lower alkanoic acid to alkylphenol and metal base to alkylphenol ratios are used, then the total metal base to alkylphenol ratio range will be about from 0.55 to 1.2 moles of metal base per mole of alkylphenol. Obviously, this additional metal base will not be required where salts of alkanoic acids are used in place of the acids.

The reaction is also typically and preferably conducted in a compatible liquid diluent, preferably a low viscosity mineral or synthetic oil. The reaction is preferably conducted for a sufficient length of time to ensure complete reaction of the sulfur. This is especially important where high TBN products are desired because the synthesis of such products generally requires using carbon dioxide together with a polyol promoter. Accordingly, any unreacted sulfur remaining in the reaction mixture will catalyze the formation of deleterious oxidation products of the polyol promoter during the overbasing step.

Where the neutralization is conducted as a separate step, both the neutralization and the subsequent sulfurization are conducted under the same conditions as set forth above. Optionally specialized sulfurization catalysts, such as described in U.S. Pat. No. 4,744,921, can be employed in the neutralization-sulfurization reaction together with the lower alkanoic acid. But, in general any benefit afforded by the sulfurization catalyst, for example, reduced reaction time, is offset by the increase in costs incurred by the catalyst and/or the presence of undesired residues in the case of halide catalysts or alkali metal sulfides; especially, as excellent reaction rates can be obtained by merely using acetic and/or propionic acid mixtures with formic acid and increasing reaction temperatures.

In one embodiment, the sulfurization process is conducted in the presence of water throughout the process. This results in lower crude sediments (more efficient filtration), less haze, and improved water stability.

Preferably, at least 50 wt % of the promoter is added to the reaction at a temperature of at least 130° C. This results in more efficient filtration.

In one embodiment, the TBN of the non-overbased sulfurized alkylphenate detergent is from about 180 to about 250 on an actives basis. In one embodiment, the TBN of the non-overbased sulfurized alkylphenate detergent is from about 190 to about 240, about 190 to about 230, about 180 to about 220, and about 190 to 220.

If a high TBN product is desired, the sulfurized phenate product can be overbased by carbonation. Such carbonation can be conveniently effected by addition of a polyol promoter, typically an alkylene diol, e.g., ethylene glycol, and carbon dioxide to the sulfurized phenate reaction product. Additional metal base can be added at this time and/or excess metal base can be used in the neutralization step. Preferably, an alkenyl succinimide or a neutral or overbased Group II metal hydrocarbylsulfonate is added to either the neutralization-sulfurization reaction mixture or overbasing reaction mixture. The succinimide or sulfonate assists in solubilizing both the alkylphenol and the phenate reaction product and therefore, when used, is preferably added to the initial reaction mixture. Overbasing is typically conducted at temperatures in the range of above from 160° C. to 190° C., preferably 170° C. to 180° C., for about from 0.1 to 4 hours, depending on whether a moderate or high TBN product is desired. Conveniently, the reaction is conducted by the simple expedient of bubbling gaseous carbon dioxide through the reaction mixture. Excess diluent and any water formed during the overbasing reaction can be conveniently removed by distillation either during or after the reaction.

Carbon dioxide is employed in the reaction system in conjunction with the metal base to form overbased products and is typically employed at a ratio of about from 1 to 3 moles per mole of alkylphenol, and preferably from about 2 to about 3 moles per mole of alkylphenol. Preferably, the amount of CO₂ incorporated into the overbased sulfurized alkylphenate provides for a CO₂ to metal weight ratio of about from 0.65:1 to about 0.73:1. All of the metal base including the excess used for overbasing may be added in the neutralization or a portion of the Group II base can be added prior to carbonation.

Where a moderate TBN product (a TBN of about 100 to 300on an active basis) is desired, a stoichiometric amount or slight excess of metal base can be used in the neutralization step; for example, about from 0.5 to 1.3 moles of base per mole of alkylphenol in addition to the amount needed to neutralize the lower alkanoic acid. High TBN products (a TBN of greater than about 300 on an active basis) are typically prepared by using a mole ratio of metal base to alkylphenol of about 1 to 2.5, preferably about 1.5 to 2, a carbon dioxide mole ratio of about 0.5 to 2, preferably 0.75 to 1.5, moles of carbon dioxide per mole of alkylphenol and about 0.5 to 2.5, or about 1.2 to about 2 moles of alkylene glycol. Again where lower alkanoic acids are used, in contrast to their salts, an additional amount of metal base sufficient to neutralize the lower alkanoic acid should be used.

The TBN of the overbased sulfurized alkylphenate detergent made by this process is from about 100 to about 400 based on the additive concentrate. In one embodiment, the TBN of the overbased sulfurized alkylphenate detergent is from about 250 to about 600 on an actives basis. In one embodiment, the TBN of the overbased sulfurized alkylphenate detergent is from about 300 to about 500, about 350 to about 500, about 300 to about 550, about 250 to about 500, and about 250 to 450 on an actives basis.

As noted above all of the excess metal base needed to produce a high TBN product can be added in the neutralization-sulfurization step or the excess above that needed to neutralize the alkylphenol can be added in the overbasing step or divided in any proportion between the two steps. Typically where very high TBN products are desired a portion of the metal base will be added in the overbasing step. The neutralization reaction mixture or overbasing reaction mixture preferably also contains about from 1 to 20, preferably 5 to 15, weight percent of a neutral or overbased sulfonate and/or an alkenyl succinimide based on the weight of alkylphenol. (In general where high TBN are desired, TBN in the range of about from 250 to 300 are preferred.)

Typically, the process is conducted under vacuum up to a slight pressure, i.e., pressures ranging from about 25 mm Hg absolute to 850 mm Hg absolute and preferably is conducted under vacuum to reduce foaming up to atmospheric pressure, e.g., about from 40 mm Hg absolute to 760 mm Hg absolute.

Additional details regarding the general preparation of sulfurized phenates can be had by reference to the various publications and patents in this technology such as, for example, U.S. Pat. Nos. 2,680,096; 3,178,368 and 3,801,507.

Considering now in detail, the reactants and reagents used in the present process, first all allotropic forms of sulfur can be used. The sulfur can be employed either as molten sulfur or as a solid (e.g., powder or particulate) or as a solid suspension in a compatible hydrocarbon liquid.

Preferably, the metal base used is calcium hydroxide because of its handling convenience versus, for example, calcium oxide, and also because it affords excellent results. Other calcium bases can also be used, for example, calcium alkoxides.

In one embodiment, a mixture of metal bases is used. For instance, a substantially calcium containing phenate is prepared with exactly enough lithium base to neutralize the alkanoic promoter.

In another embodiment, the metal base used is lithium hydroxide because it affords excellent results. Other lithium bases can also be used, for example, lithium alkoxides.

Suitable alkylphenols for the manufacture of the non-overbased or overbased sulfurized alkylphenate detergent which can be used in the present invention are those wherein the alkyl substituents contain a sufficient number of carbon atoms to render the resulting overbased or non-overbased sulfurized calcium alkylphenate detergent composition oil-soluble. Oil solubility may be provided by a single long chain alkyl substitute or by a combination of alkyl substituents such as 6 to 36 carbon atoms. In one embodiment, the alkylphenol used in the present invention will be a mixture of different alkylphenols, e.g., C₂₀ to C₂₄ alkylphenol. In another embodiment, the alkylphenol used in the present invention is a branched chain alkylphenol, wherein the alkyl substituent is a C₉ to C₁₈ branched alkyl group such as a C₁₂ alkyl derived from propylene tetramer.

In one embodiment, wherein a branched chain alkylphenol derived from C₁₂ propylene tetramer is employed as the starting alkylphenol, the non-overbased or overbased sulfurized alkylphenate detergent will contain less than less than about 5.0 wt. % , less than about 4.0 wt. %, less than about 3.0 wt. %, less than about 2.0 wt. % of total free unsulfurized tetrapropenyl phenol starting material or its metal salt. The amount of total free unsulfurized tetrapropenyl phenol starting material or its metal salt is "total TPP" or "total residual TPP" in the non-overbased or overbased sulfurized alkylphenate detergent.

Preferably, the alkylphenols are para-alkylphenols or ortho-alkylphenols. Since it is believed that para-alkylphenols facilitate the preparation of highly overbased sulfurized alkylphenate where overbased products are desired, the alkylphenol is preferably predominantly a para-alkylphenol with no more than about 45 mole percent of the alkylphenol being ortho-alkylphenols; and more preferably no more than about 35 mole percent of the alkylphenol is ortho-alkylphenol. Alkyl-hydroxy toluenes or xylenes, and other alkyl phenols having one or more alkyl substituents in addition to at least one long chained alkyl substituent can also be used.

If a supplemental sulfurization catalyst, such as for example desired in U.S. Pat. No. 4,744,921, is employed, it is typically employed at from about 0.5 to 10 wt % relative to the alkylphenol, and preferably at from about 1 to 2 wt %. In a preferred embodiment, the sulfurization catalyst is added to the reaction mixture as a liquid. This can be accomplished by dissolving the sulfurization catalyst in molten sulfur or in the alkylphenol as a premix to the reaction.

The overbasing procedure used to prepare the high TBN overbased sulfurized alkylphenate compositions of this invention also employs a polyol promoter, typically a C₂ to C₄ alkylene glycol, preferably ethylene glycol, in the overbasing step.

Suitable high molecular weight alkanol which can be used in the neutralization-sulfurization and overbasing are those containing 8 to 16, or 9 to 15, carbon atoms. When employed, the alkanol is typically employed at a molar charge of from about 0.5 to about 5 moles or from about 0.5 to about 4 moles or from about 1 to about 2 moles of high molecular alkanol per mole of alkylphenol. Examples of suitable alkanols include 1-octanol, 1-decanol (decyl alcohol), 2-ethyl-hexanol, and the like. It can be beneficial to use a high molecular weight alcohol in the process because it acts as a solvent and also forms an azeotrope with water and hence facilitates affords a convenient way to remove the water generated by the neutralization or any other water in the system, by azeotropic distillation either after or preferably during the reaction. The high molecular weight alcohol may also play some part in the chemical reaction mechanism in the sense that it facilitates the removal of the byproduct water during the reaction, thus pushing the reaction to the right of the reaction equation.

In the general preparation of overbased calcium sulfurized alkylphenates, demulsifiers can be added to enhance the hydrolytic stability of the overbased sulfurized calcium alkylphenate and may be similarly employed in the present process if desired. Suitable demulsifiers which can be used include, by way of example, nonionic detergents. When used, demulsifiers are generally added at from about 0.1 to about 1 wt. % to the alkylphenol.

According to the invention, the amount of the phenate detergent is from about 0.05 wt. % to about 5 wt. %, from about 0.05 wt. % to about 3 wt. %, from about 0.1 wt. % to about 2 wt. %, from about 0.15 wt. % to about 1.5 wt. %, from about 0.15 wt. % to about 1 wt. %, and from about 0.2 wt. % to about 0.8 wt. %, based on the total weight of the lubricating oil composition.

### Sulfur-containing wear inhibitor

Known types of organic sulfur compounds which have heretofore been suggested as being useful as extreme pressure (EP) agents may be used as a sulfur-containing agent These include organic sulfides and polysulfides, sulfurized oils and esters or fatty acids, and mixtures thereof. These sulfur compounds may contain other groups which are beneficial and these include halogen groups. According to the invention, the sulfur compounds are sulfurized olefins.

Examples of organic sulfides and polysulfides which are useful as EP agents include aliphatic and aromatic sulfides and polysulfides such as hexyl sulfide, octadecyl sulfide, butyl disulfide, amyl disulfide, hexyl disulfide, octadecyl disulfide, diphenyl sulfide, dibenzyl sulfide, dixylyl sulfide, diphenyl disulfide, dinaphthyl disulfide, diphenol disulfide, dibenzyl disulfide, bis(chlorobenzyl) disulfide, dibenzyl trisulfide, dibutyl tetrasulfide, sulfurized dipentene and sulfurized terpene.

A preferred class of sulfur-containing additives are those made by reacting sulfur and/or sulfur monochloride with an olefin such as isobutylene. Particularly preferred are the sulfurized olefins disclosed in U.S. Pat. Nos. 4,563,302 and 4,204,969.

Halogenated derivatives of the above sulfides and polysulfides are useful and examples include the chlorinated and fluorinated derivatives of diethyl sulfide and disulfide, dioctyl sulfide and disulfide, diamyl sulfide and disulfide, diphenyl sulfide and disulfide, and dibenzyl sulfide and disulfide. A more exhaustive listing of sulfur and halogen EP agents which may be used is found in U.S. Pat. No. 2,208,163. Examples of sulfurized oils include sulfurized sperm oil, sulfurized methyl ester of oleic acid, and sulfurized sperm oil replacements. Other examples of sulfurized oils include sulfurized methyl linoleate, sulfurized animal and vegetable oils, sulfurized lard oil, and sulfurized cottonseed oil.

In one embodiment, the sulfurized olefin is sulfurized isobutylene. Sulfurized isobutylene for use in certain embodiments of this invention may include one or more of sulfurized isobutylenes such as Mobilad® C-100 and R. T. Vanderbilt Vanlube SB.

The concentration of the sulfur-containing wear inhibitor in the lubricating oil composition according to the invention is greater than 0.05 wt. %. In one embodiment, the amount of the sulfur-containing wear inhibitor in the lubricating oil compositions disclosed herein is about 0.06 to 2 wt. % based on the total weight of the lubricating oil composition. In one embodiment, the amount of the sulfur-containing wear inhibitor in the lubricating oil compositions is 0.06 to 1.5 wt. %. In one embodiment, the amount of the sulfur-containing wear inhibitor in the lubricating oil compositions is 0.06 to 1.25 wt. %. In one embodiment, the amount of the sulfur-containing wear inhibitor in the lubricating oil compositions is 0.07 to 1.25 wt. %. In one embodiment, the amount of the sulfur-containing wear inhibitor in the lubricating oil compositions is 0.08 to 1.25 wt. %. In one embodiment, the amount of the sulfur-containing wear inhibitor in the lubricating oil compositions is 0.09 to 1.25 wt. %. In one embodiment, the amount of the sulfur-containing wear inhibitor in the lubricating oil compositions is 0.09 to 1.0 wt. %. In one embodiment, the amount of the sulfur-containing wear inhibitor in the lubricating oil compositions is 0.09 to 0.9 wt. %. In one embodiment, the amount of the sulfur-containing wear inhibitor in the lubricating oil compositions is 0.09 to 0.8 wt. %. In one embodiment, the amount of the sulfur-containing wear inhibitor in the lubricating oil compositions is 0.09 to 0.6 wt. %. In one embodiment, the amount of the sulfur-containing wear inhibitor in the lubricating oil compositions is 0.09 to 0.4 wt. %. In one embodiment, the amount of the sulfur-containing wear inhibitor in the lubricating oil compositions is 0.09 to 0.2 wt. %.In one embodiment, the amount of the sulfur-containing wear inhibitor in the lubricating oil compositions is 0.1 wt. %.

### The Oil of Lubricating Viscosity

The lubricating oil compositions disclosed herein generally comprise at least one oil of lubricating viscosity. Any base oil known to a skilled artisan can be used as the oil of lubricating viscosity disclosed herein. Some base oils suitable for preparing the lubricating oil compositions have been described in Mortier et al., "Chemistry and Technology of Lubricants," 2nd Edition, London, Springer, Chapters 1 and 2 (1996); and A. Sequeria, Jr., "Lubricant Base Oil and Wax Processing," New York, Marcel Decker, Chapter 6, (1994); and D. V. Brock, Lubrication Engineering, Vol. 43, pages 184-5, (1987), Generally, the amount of the base oil in the lubricating oil composition may be from about 70 to about 99.5 wt. %, based on the total weight of the lubricating oil composition. In some embodiments, the amount of the base oil in the lubricating oil composition is from about 75 to about 99 wt. %, from about 80 to about 98.5 wt. %, or from about 80 to about 98 wt. %, based on the total weight of the lubricating oil composition.

In certain embodiments, the base oil is or comprises any natural or synthetic lubricating base oil fraction. Some non-limiting examples of synthetic oils include oils, such as polyalphaolefins or PAOs, prepared from the polymerization of at least one alpha-olefin, such as ethylene, or from hydrocarbon synthesis procedures using carbon monoxide and hydrogen gases, such as the Fisher-Tropsch process. In certain embodiments, the base oil comprises less than about 10 wt. % of one or more heavy fractions, based on the total weight of the base oil. A heavy fraction refers to a lube oil fraction having a viscosity of at least about 20 cSt at 100° C. In certain embodiments, the heavy fraction has a viscosity of at least about 25 cSt or at least about 30 cSt at 100° C. In further embodiments, the amount of the one or more heavy fractions in the base oil is less than about 10 wt. %, less than about 5 wt. %, less than about 2.5 wt. %, less than about 1 wt. %, or less than about 0.1 wt. %, based on the total weight of the base oil. In still further embodiments, the base oil comprises no heavy fraction.

In certain embodiments, the lubricating oil compositions comprise a major amount of a base oil of lubricating viscosity. In some embodiments, the base oil has a kinematic viscosity at 100° C. from about 2.5 centistokes (cSt) to about 20 cSt, from about 4 centistokes (cSt) to about 20 cSt, or from about 5 cSt to about 16 cSt. The kinematic viscosity of the base oils or the lubricating oil compositions disclosed herein can be measured according to ASTM D 445,.

In other embodiments, the base oil is or comprises a base stock or blend of base stocks. In further embodiments, the base stocks are manufactured using a variety of different processes including, but not limited to, distillation, solvent refining, hydrogen processing, oligomerization, esterification, and rerefining. In some embodiments, the base stocks comprise a rerefined stock. In further embodiments, the rerefined stock shall be substantially free from materials introduced through manufacturing, contamination, or previous use.

In some embodiments, the base oil comprises one or more of the base stocks in one or more of Groups I-V as specified in the American Petroleum Institute (API) Publication 1509, Fourteen Edition, December 1996 (i.e., API Base Oil Interchangeability Guidelines for Passenger Car Motor Oils and Diesel Engine Oils), The API guideline defines a base stock as a lubricant component that may be manufactured using a variety of different processes. Groups I, II and III base stocks are mineral oils, each with specific ranges of the amount of saturates, sulfur content and viscosity index. Group IV base stocks are polyalphaolefins (PAO). Group V base stocks include all other base stocks not included in Group I, II, III, or IV.

In some embodiments, the base oil comprises one or more of the base stocks in Group I, II, III, IV, V or a combination thereof. In other embodiments, the base oil comprises one or more of the base stocks in Group II, III, IV or a combination thereof. In further embodiments, the base oil comprises one or more of the base stocks in Group II, III, IV or a combination thereof wherein the base oil has a kinematic viscosity from about 2.5 centistokes (cSt) to about 20 cSt, from about 4 cSt to about 20 cSt, or from about 5 cSt to about 16 cSt at 100° C.

The base oil may be selected from the group consisting of natural oils of lubricating viscosity, synthetic oils of lubricating viscosity and mixtures thereof. In some embodiments, the base oil includes base stocks obtained by isomerization of synthetic wax and slack wax, as well as hydrocrackate base stocks produced by hydrocracking (rather than solvent extracting) the aromatic and polar components of the crude. In other embodiments, the base oil of lubricating viscosity includes natural oils, such as animal oils, vegetable oils, mineral oils (e.g., liquid petroleum oils and solvent treated or acid-treated mineral oils of the paraffinic, naphthenic or mixed paraffinic-naphthenic types), oils derived from coal or shale, and combinations thereof. Some non-limiting examples of animal oils include bone oil, lanolin, fish oil, lard oil, dolphin oil, seal oil, shark oil, tallow oil, and whale oil. Some non-limiting examples of vegetable oils include castor oil, olive oil, peanut oil, rapeseed oil, corn oil, sesame oil, cottonseed oil, soybean oil, sunflower oil, safflower oil, hemp oil, linseed oil, tung oil, oiticica oil, jojoba oil, and meadow foam oil. Such oils may be partially or fully hydrogenated.

In some embodiments, the synthetic oils of lubricating viscosity include hydrocarbon oils and halo-substituted hydrocarbon oils such as polymerized and inter-polymerized olefins, alkylbenzenes, polyphenyls, alkylated diphenyl ethers, alkylated diphenyl sulfides, as well as their derivatives, analogues and homologues thereof, and the like. In other embodiments, the synthetic oils include alkylene oxide polymers, interpolymers, copolymers and derivatives thereof wherein the terminal hydroxyl groups can be modified by esterification, etherification, and the like. In further embodiments, the synthetic oils include the esters of dicarboxylic acids with a variety of alcohols. In certain embodiments, the synthetic oils include esters made from C₅ to C₁₂ monocarboxylic acids and polyols and polyol ethers. In further embodiments, the synthetic oils include tri-alkyl phosphate ester oils, such as tri-n-butyl phosphate and tri-isobutyl phosphate.

In some embodiments, the synthetic oils of lubricating viscosity include silicon-based oils (such as the polyakyl-, polyaryl-, polyalkoxy-, polyaryloxy-siloxane oils and silicate oils). In other embodiments, the synthetic oils include liquid esters of phosphorus-containing acids, polymeric tetrahydrofurans, polyalphaolefins, and the like.

Base oil derived from the hydroisomerization of wax may also be used, either alone or in combination with the aforesaid natural and/or synthetic base oil. Such wax isomerate oil is produced by the hydroisomerization of natural or synthetic waxes or mixtures thereof over a hydroisomerization catalyst.

In further embodiments, the base oil comprises a poly-alpha-olefin (PAO). In general, the poly-alpha-olefins may be derived from an alpha-olefin having from about 2 to about 30, from about 4 to about 20, or from about 6 to about 16 carbon atoms. Non-limiting examples of suitable poly-alpha-olefins include those derived from octene, decene, mixtures thereof, and the like. These poly-alpha-olefins may have a viscosity from about 2 to about 15, from about 3 to about 12, or from about 4 to about 8 centistokes at 100° C. In some instances, the poly-alpha-olefins may be used together with other base oils such as mineral oils.

In further embodiments, the base oil comprises a polyalkylene glycol or a polyalkylene glycol derivative, where the terminal hydroxyl groups of the polyalkylene glycol may be modified by esterification, etherification, acetylation and the like. Non-limiting examples of suitable polyalkylene glycols include polyethylene glycol, polypropylene glycol, polyisopropylene glycol, and combinations thereof. Non-limiting examples of suitable polyalkylene glycol derivatives include ethers of polyalkylene glycols (e.g., methyl ether of polyisopropylene glycol, diphenyl ether of polyethylene glycol, diethyl ether of polypropylene glycol, etc.), mono- and polycarboxylic esters of polyalkylene glycols, and combinations thereof. In some instances, the polyalkylene glycol or polyalkylene glycol derivative may be used together with other base oils such as poly-alpha-olefins and mineral oils.

In further embodiments, the base oil comprises any of the esters of dicarboxylic acids (e.g., phthalic acid, succinic acid, alkyl succinic acids, alkenyl succinic acids, maleic acid, azelaic acid, suberic acid, sebacic acid, fumaric acid, adipic acid, linoleic acid dimer, malonic acid, alkyl malonic acids, alkenyl malonic acids, and the like) with a variety of alcohols (e.g., butyl alcohol, hexyl alcohol, dodecyl alcohol, 2-ethylhexyl alcohol, ethylene glycol, diethylene glycol monoether, propylene glycol, and the like). Non-limiting examples of these esters include dibutyl adipate, di(2-ethylhexyl) sebacate, di-n-hexyl fumarate, dioctyl sebacate, diisooctyl azelate, diisodecyl azelate, dioctyl phthalate, didecyl phthalate, dieicosyl sebacate, the 2-ethylhexyl diester of linoleic acid dimer, and the like.

In further embodiments, the base oil comprises a hydrocarbon prepared by the Fischer-Tropsch process. The Fischer-Tropsch process prepares hydrocarbons from gases containing hydrogen and carbon monoxide using a Fischer-Tropsch catalyst. These hydrocarbons may require further processing in order to be useful as base oils. For example, the hydrocarbons may be dewaxed, hydroisomerized, and/or hydrocracked using processes known to a person of ordinary skill in the art.

In further embodiments, the base oil comprises an unrefined oil, a refined oil, a rerefined oil, or a mixture thereof. Unrefined oils are those obtained directly from a natural or synthetic source without further purification treatment. Non-limiting examples of unrefined oils include shale oils obtained directly from retorting operations, petroleum oils obtained directly from primary distillation, and ester oils obtained directly from an esterification process and used without further treatment. Refined oils are similar to the unrefined oils except the former have been further treated by one or more purification processes to improve one or more properties. Many such purification processes are known to those skilled in the art such as solvent extraction, secondary distillation, acid or base extraction, filtration, percolation, and the like. Rerefined oils are obtained by applying to refined oils processes similar to those used to obtain refined oils. Such rerefined oils are also known as reclaimed or reprocessed oils and often are additionally treated by processes directed to removal of spent additives and oil breakdown products.

### Other additives

Optionally, the lubricating oil composition may further comprise at least an additive or a modifier (hereinafter designated as "additive") that can impart or improve any desirable property of the lubricating oil composition. Any additive known to a person of ordinary skill in the art may be used in the lubricating oil compositions disclosed herein. Some suitable additives have been described in Mortier et al., "Chemistry and Technology of Lubricants," 2nd Edition, London, Springer, (1996); and Leslie R. Rudnick, "Lubricant Additives: Chemistry and Applications," New York, Marcel Dekker (2003). In some embodiments, the additive can be selected from the group consisting of antioxidants, antiwear agents, detergents, rust inhibitors, demulsifiers, friction modifiers, multifunctional additives, viscosity index improvers, pour point depressants, foam inhibitors, metal deactivators, dispersants, corrosion inhibitors, lubricity improvers, thermal stability improvers, anti-haze additives, icing inhibitors, dyes, markers, static dissipaters, biocides and combinations thereof. In general, the concentration of each of the additives in the lubricating oil composition, when used, may range from about 0.001 wt. % to about 10 wt. %, from about 0.01 wt. % to about 5 wt. %, or from about 0.1 wt. % to about 2.5 wt. %, based on the total weight of the lubricating oil composition. Further, the total amount of the additives in the lubricating oil composition may range from about 0.001 wt. % to about 20 wt. %, from about 0.01 wt. % to about 10 wt. %, or from about 0.1 wt. % to about 5 wt. %, based on the total weight of the lubricating oil composition.

Optionally, the lubricating oil composition disclosed herein can further comprise an additional antioxidant that can reduce or prevent the oxidation of the base oil. Any antioxidant known by a person of ordinary skill in the art may be used in the lubricating oil composition. Non-limiting examples of suitable antioxidants include amine-based antioxidants (e.g., alkyl diphenylamines, phenyl-α-naphthylamine, alkyl or aralkyl substituted phenyl-α-naphthylamine, alkylated p-phenylene diamines, tetramethyl-diaminodiphenylamine and the like), phenolic antioxidants (e.g., 2-tert-butylphenol, 4-methyl-2,6-di-tert-butylphenol, 2,4,6-tri-tert-butylphenol, 2,6-di-tert-butyl-p-cresol, 2,6-di-tert-butylphenol, 4,4'-methylenebis-(2,6-di-tert-butylphenol), 4,4'-thiobis(6-di-tert-butyl-o-cresol) and the like), sulfur-based antioxidants (e.g., dilauryl-3,3'-thiodipropionate, sulfurized phenolic antioxidants and the like), phosphorous-based antioxidants (e.g., phosphites and the like), zinc dithiophosphate, oil-soluble copper compounds and combinations thereof. The amount of the antioxidant may vary from about 0.01 wt. % to about 10 wt. %, from about 0.05 wt. % to about 5 wt. %, or from about 0.1 wt. % to about 3 wt. %, based on the total weight of the lubricating oil composition. Some suitable antioxidants have been described in Leslie R. Rudnick, "Lubricant Additives: Chemistry and Applications," New York, Marcel Dekker, Chapter 1, pages 1-28 (2003),

Optionally, the lubricating oil composition disclosed herein can further comprise an additional detergent. Some non-limiting examples of suitable metal detergent include sulfurized or unsulfurized alkyl or alkenyl phenates, alkyl or alkenyl aromatic sulfonates, borated sulfonates, sulfurized or unsulfurized metal salts of multi-hydroxy alkyl or alkenyl aromatic compounds, alkyl or alkenyl hydroxy aromatic sulfonates, sulfurized or unsulfurized alkyl or alkenyl naphthenates, metal salts of alkanoic acids, metal salts of an alkyl or alkenyl multiacid, and chemical and physical mixtures thereof. Other non-limiting examples of suitable metal detergents include metal sulfonates, phenates, salicylates, phosphonates, thiophosphonates and combinations thereof. The metal can be any metal suitable for making sulfonate, phenate, salicylate or phosphonate detergents. Non-limiting examples of suitable metals include alkali metals, alkaline metals and transition metals. In some embodiments, the metal is Ca, Mg, Ba, K, Na, Li or the like.

Generally, the amount of the detergent is from about 0.001 wt. % to about 5 wt. %, from about 0.05 wt. % to about 3 wt. %, or from about 0.1 wt. % to about 1 wt. %, based on the total weight of the lubricating oil composition. Some suitable detergents have been described in Mortier et al., "Chemistry and Technology of Lubricants ," 2nd Edition, London, Springer, Chapter 3, pages 75-85 (1996); and Leslie R. Rudnick, "Lubricant Additives: Chemistry and Applications," New York, Marcel Dekker, Chapter 4, pages 113-136 (2003),

The lubricating oil composition disclosed herein can optionally comprise a pour point depressant that can lower the pour point of the lubricating oil composition. Any pour point depressant known by a person of ordinary skill in the art may be used in the lubricating oil composition. Non-limiting examples of suitable pour point depressants include polymethacrylates, alkyl acrylate polymers, alkyl methacrylate polymers, di(tetra-paraffin phenol)phthalate, condensates of tetra-paraffin phenol, condensates of a chlorinated paraffin with naphthalene and combinations thereof. In some embodiments, the pour point depressant comprises an ethylene-vinyl acetate copolymer, a condensate of chlorinated paraffin and phenol, polyalkyl styrene or the like. The amount of the pour point depressant may vary from about 0.01 wt. % to about 10 wt. %, from about 0.05 wt. % to about 5 wt. %, or from about 0.1 wt. % to about 3 wt. %, based on the total weight of the lubricating oil composition. Some suitable pour point depressants have been described in Mortier et al., "Chemistry and Technology of Lubricants," 2nd Edition, London, Springer, Chapter 6, pages 187-189 (1996); and Leslie R. Rudnick, "Lubricant Additives: Chemistry and Applications," New York, Marcel Dekker, Chapter 11, pages 329-354 (2003).

The lubricating oil composition disclosed herein can optionally comprise a demulsifier that can promote oil-water separation in lubricating oil compositions that are exposed to water or steam. Any demulsifier known by a person of ordinary skill in the art may be used in the lubricating oil composition. Non-limiting examples of suitable demulsifiers include anionic surfactants (e.g., alkyl-naphthalene sulfonates, alkyl benzene sulfonates and the like), nonionic alkoxylated alkylphenol resins, polymers of alkylene oxides (e.g., polyethylene oxide, polypropylene oxide, block copolymers of ethylene oxide, propylene oxide and the like), esters of oil soluble acids, polyoxyethylene sorbitan ester and combinations thereof. The amount of the demulsifier may vary from about 0.01 wt. % to about 10 wt. %, from about 0.05 wt. % to about 5 wt. %, or from about 0.1 wt. % to about 3 wt. %, based on the total weight of the lubricating oil composition. Some suitable demulsifiers have been described in Mortier et al., "Chemistry and Technology of Lubricants," 2nd Edition, London, Springer, Chapter 6, pages 190-193 (1996).

The lubricating oil composition disclosed herein can optionally comprise a foam inhibitor or an anti-foam that can break up foams in oils. Any foam inhibitor or anti-foam known by a person of ordinary skill in the art may be used in the lubricating oil composition. Non-limiting examples of suitable anti-foams include silicone oils or polydimethylsiloxanes, fluorosilicones, alkoxylated aliphatic acids, polyethers (e.g., polyethylene glycols), branched polyvinyl ethers, alkyl acrylate polymers, alkyl methacrylate polymers, polyalkoxyamines and combinations thereof. In some embodiments, the anti-foam comprises glycerol monostearate, polyglycol palmitate, a trialkyl monothiophosphate, an ester of sulfonated ricinoleic acid, benzoylacetone, methyl salicylate, glycerol monooleate, or glycerol dioleate. The amount of the anti-foam may vary from about 0.01 wt. % to about 5 wt. %, from about 0.05 wt. % to about 3 wt. %, or from about 0.1 wt. % to about 1 wt. %, based on the total weight of the lubricating oil composition. Some suitable anti-foams have been described in Mortier et al., "Chemistry and Technology of Lubricants," 2nd Edition, London, Springer, Chapter 6, pages 190-193 (1996),

The lubricating oil composition disclosed herein can optionally comprise a corrosion inhibitor that can reduce corrosion. Any corrosion inhibitor known by a person of ordinary skill in the art may be used in the lubricating oil composition. Non-limiting examples of suitable corrosion inhibitor include half esters or amides of dodecylsuccinic acid, phosphate esters, thiophosphates, alkyl imidazolines, sarcosines and combinations thereof. The amount of the corrosion inhibitor may vary from about 0.01 wt. % to about 5 wt. %, from about 0.05 wt. % to about 3 wt. %, or from about 0.1 wt. % to about 1 wt. %, based on the total weight of the lubricating oil composition. Some suitable corrosion inhibitors have been described in Mortier et al., "Chemistry and Technology of Lubricants," 2nd Edition, London, Springer, Chapter 6, pages 193-196 (1996).

The lubricating oil composition disclosed herein can optionally comprise a rust inhibitor that can inhibit the corrosion of ferrous metal surfaces. Any rust inhibitor known by a person of ordinary skill in the art may be used in the lubricating oil composition. Non-limiting examples of suitable rust inhibitors include oil-soluble monocarboxylic acids (e.g., 2-ethylhexanoic acid, lauric acid, myristic acid, palmitic acid, oleic acid, linoleic acid, linolenic acid, behenic acid, cerotic acid and the like), oil-soluble polycarboxylic acids (e.g., those produced from tall oil fatty acids, oleic acid, linoleic acid and the like), alkenylsuccinic acids in which the alkenyl group contains 10 or more carbon atoms (e.g., tetrapropenylsuccinic acid, tetradecenylsuccinic acid, hexadecenylsuccinic acid, and the like); long-chain alpha,omega-dicarboxylic acids having a molecular weight in the range of 600 to 3000 daltons and combinations thereof. The amount of the rust inhibitor may vary from about 0.01 wt. % to about 10 wt. %, from about 0.05 wt. % to about 5 wt. %, or from about 0.1 wt. % to about 3 wt. %, based on the total weight of the lubricating oil composition.

Other non-limiting examples of suitable rust inhibitors include nonionic polyoxyethylene surface active agents such as polyoxyethylene lauryl ether, polyoxyethylene higher alcohol ether, polyoxyethylene nonyl phenyl ether, polyoxyethylene octyl phenyl ether, polyoxyethylene octyl stearyl ether, polyoxyethylene oleyl ether, polyoxyethylene sorbitol monostearate, polyoxyethylene sorbitol mono-oleate, and polyethylene glycol mono-oleate. Further non-limiting examples of suitable rust inhibitor include stearic acid and other fatty acids, dicarboxylic acids, metal soaps, fatty acid amine salts, metal salts of heavy sulfonic acid, partial carboxylic acid ester of polyhydric alcohol, and phosphoric ester.

In some embodiments, the lubricating oil composition comprises at least a multifunctional additive. Some non-limiting examples of suitable multifunctional additives include sulfurized oxymolybdenum dithiocarbamate, sulfurized oxymolybdenum organophosphorodithioate, oxymolybdenum monoglyceride, oxymolybdenum diethylate amide, amine-molybdenum complex compound, and sulfur-containing molybdenum complex compound.

In certain embodiments, the lubricating oil composition comprises at least a viscosity index improver. Some non-limiting examples of suitable viscosity index improvers include polymethacrylate type polymers, ethylene-propylene copolymers, styrene-isoprene copolymers, hydrated styrene-isoprene copolymers, polyisobutylene, and dispersant type viscosity index improvers.

In some embodiments, the lubricating oil composition comprises at least a metal deactivator. Some non-limiting examples of suitable metal deactivators include disalicylidene propylenediamine, triazole derivatives, thiadiazole derivatives, and mercaptobenzimidazoles.

The additives disclosed herein may be in the form of an additive concentrate having more than one additive. The additive concentrate may comprise a suitable diluent, such as a hydrocarbon oil of suitable viscosity. Such diluent can be selected from the group consisting of natural oils (e.g., mineral oils), synthetic oils and combinations thereof. Some non-limiting examples of the mineral oils include paraffin-based oils, naphthenic-based oils, asphaltic-based oils and combinations thereof. Some non-limiting examples of the synthetic base oils include polyolefin oils (especially hydrogenated alpha-olefin oligomers), alkylated aromatic, polyalkylene oxides, aromatic ethers, and carboxylate esters (especially diester oils) and combinations thereof. In some embodiments, the diluent is a light hydrocarbon oil, both natural or synthetic. Generally, the diluent oil can have a viscosity from about 13 centistokes to about 35 centistokes at 40° C.

Generally, it is desired that the diluent readily solubilizes the lubricating oil soluble additive of the invention and provides an oil additive concentrate that is readily soluble in the lubricant base oil stocks or fuels. In addition, it is desired that the diluent not introduce any undesirable characteristics, including, for example, high volatility, high viscosity, and impurities such as heteroatoms, to the lubricant base oil stocks and thus, ultimately to the finished lubricant or fuel.

A further embodiment provides an oil soluble additive concentrate composition comprising an inert diluent and from 2.0 % to 90% by weight, preferably 10% to 50% by weight based on the total concentrate, of an oil soluble additive composition disclosed herein.

The following examples are presented to exemplify embodiments of the invention but are not intended to limit the invention to the specific embodiments set forth.

### EXAMPLES

The following examples are intended for illustrative purposes only and do not limit in any way the scope of the present invention. Table 3 shows both the Inventive and Comparative examples, together with test results for the Micro-clutch Test and the Shell 4-ball test.
Detergent 1 is an oil concentrate of high overbased 320 TBN Ca alkyltoluene sulfonate.
Detergent 2 is an oil concentrate of 260 TBN sulfurized Ca phenate.
Dispersant 1 is an oil concentrate of mono-succinimide derived from 1000 MW PIB.
Dispersant 2 is an oil concentrate of a borated bis-succinimide derived from 1300MW PIB.
Dispersant 3 is an oil concentrate of a borated bis-succinimide derived from 1000 MW PIB.
The dithiophosphate carboxylic acid compound is a 3-[[bis(2-methylpropoxy)phosphinothioyl]thio]-2-methyl-propanoic acid (IRGALUBE® 353), available from BASF, (Ludwigshafen, Germany)
The Sulfur-containing wear inhibitor is sulfurized isobutene, also called Mobilad C-100, available from ExxonMobil Chemical Company (Irving, TX).
The Friction modifier is oleic amide.

### Micro-clutch Test

The Inventive and Comparative Examples were evaluated using the Micro-clutch test. Friction Coefficients were measured using a micro-clutch apparatus made by Komatsu Engineering and following the Komatsu KES 07.802 procedure. That is, the disc and the plates as specified in the procedure were contacted with the pressure of 4 kgf/cm2 against the disc rotating at 20 rpm in the presence of additive component dissolved in mineral oil. The friction coefficient was measured at room temperature (25 °C), 60 °C, 80 °C, 100 °C, 120 °C, and 140 °C. The results at high temperature (140 °C) are shown in Table 3. The criteria for passing the test is a friction coefficient of 0.130 minimum.

### Shell 4-ball Welding Load (WL) Test

The welding point was evaluated by means of the Shell 4-ball test. This test is operated with one steel ball under load rotating against three steel balls held stationary in the form of a cradle. Test examples cover the lower three balls. The rotating speed is 1760 ± 40 rpm. A series of tests of 10 s duration were made at increasing load until welding occurs. The target welding load is 1960 N. The weld point is greatly influenced by the types of phosphorus compounds and those dosage. The results are shown in Table 3.

**Table 3**

| **Components** | Comp Ex. A | Comp Ex. B | Comp Ex. C | Comp Ex. D | Comp Ex. E | Ex. 1 | Ex. 2 | Ex. 3 |
|---|---|---|---|---|---|---|---|---|
| Dispersant 1 (wt. %) | 0.5 | 0.5 | 0.5 | 0.5 | 0.5 | 0.5 | 0.5 | 0.5 |
| Dispersant 2 (wt. %) | 3.0 | 3.0 | 3.0 | 3.0 | 3.0 | 3.0 | 3.0 | - |
| Dispersant 3 (wt. %) | - | - | - | - | - | - | - | 3.0 |
| Detergent 1 (wt. %) | 1.6 | 1.6 | 1.4 | 1.4 | 1.6 | 1.4 | 0.8 | 1.4 |
| Detergent 2 (wt. %) | - | - | 0.2 | 0.2 | - | 0.2 | 0.8 | 0.2 |
| Dithiophosphorylated carboxylic acid (wt. %) | 0.1 | 0.1 | - | 0.1 | 0.1 | 0.1 | 0.1 | 0.05 |
| Sulfur-containing wear inhibitor (wt. %) | 0.1 | 0.1 | 0.1 | 0.05 | 0.1 | 0.1 | 0.1 | 0.1 |
| Friction modifier (wt. %) | - | 0.05 | 0.05 | 0.05 | 0.05 | 0.05 | 0.1 | 0.05 |
| Micro-clutch Test (140°C) | 0.145 | 0.129 | 0.124 | 0.129 | 0.124 | 0.133 | 0.134 | 0.136 |
| Shell 4-ball Welding Load Test | 1568 | 1568 | 1568 | 1568 | 1568 | 1960 | 1960 | 1960 |

As can be seen in Table 3, inventive examples 1 to3 show superior performance in both the Micro-clutch and the Shell 4-ball WL test, meaning superior friction and wear performance over the comparative examples. Comparative example A does not have the phenate or friction modifier of the present invention. Comparative examples B and E do not have the phenate detergent of the present invention. Comparative example C does not have the dithiophosphorylated carboxylic acid of the present invention. Comparative example D does not have at least 0.1 wt. % sulfur-containing wear inhibitor of the present invention.

## Claims

1. A zinc-free transmission oil composition for construction machinery comprising:
(a) a major amount of an oil of lubricating viscosity,
(b) 0.025 to 1 wt. %, based on the total weight of the composition, of a dithiophosphorylated carboxylic acid compound,
(c) 0.05 to 5.0 wt. %, based on the total weight of the composition, of a phenate detergent,
(d) a friction modifier, wherein the friction modifier is present in the composition from 0.01 to 2.0 wt. %, based on the total weight of the composition, on an actives basis and wherein the friction modifier is a fatty acid amide, and
(e) greater than 0.05 wt. %, based on the total weight of the composition, of a sulfur-containing wear inhibitor, wherein the sulfurized wear inhibitor is sulfurized olefin.

2. The transmission oil composition of claim 1 wherein the dithiophosphorylated carboxylic acid compound is 3-[[bis(2-methylpropoxy)phosphinothioyl]thio]-2-methyl-propanoic acid.

3. The transmission oil composition of claim 1 further comprising a dispersant, wherein the dispersant is a basic nitrogen-containing ashless dispersant selected from hydrocarbyl succinimides; hydrocarbyl succinamides; mixed ester/amides of hydrocarbyl-substituted succinic acids formed by reacting a hydrocarbyl-substituted succinic acylating agent stepwise or with a mixture of alcohols and amines, and/or with amino alcohols; Mannich condensation products of hydrocarbyl-substituted phenols, formaldehyde and polyamines; and amine dispersants formed by reacting high molecular weight aliphatic or alicyclic halides with amines, such as polyalkylene polyamines, and mixtures thereof.

4. The transmission oil composition of claim 1 wherein the sulfurized wear inhibitor is sulfurized isobutylene.

5. The transmission oil composition in claim 1 further comprising at least a second detergent other than the phenate detergent, wherein the second detergent is selected from sulfurized or unsulfurized alkyl or alkenyl phenates, alkyl or alkenyl aromatic sulfonates, borated sulfonates, sulfurized or unsulfurized metal salts of multi-hydroxy alkyl or alkenyl aromatic compounds, alkyl or alkenyl hydroxy aromatic sulfonates, sulfurized or unsulfurized alkyl or alkenyl naphthenates, metal salts of alkanoic acids, metal salts of an alkyl or alkenyl multiacid, and chemical and physical mixtures thereof, or metal sulfonates, phenates, salicylates, phosphonates, thiophosphonates, and combinations thereof.

6. A method for lubricating the transmission of a construction machine comprising lubricating the transmission with a zinc-free transmission oil composition as claimed in any preceding claim.

## Patentansprüche

1. Zinkfreie Getriebeölzusammensetzung für Baumaschinen, umfassend
(a) eine größere Menge eines Öls mit Schmierviskosität,
(b) 0,025 bis 1 Gew.-%, auf Grundlage des Gesamtgewichts der Zusammensetzung, einer dithiophosphorylierten Carboxylsäureverbindung,
(c) 0,05 bis 5,0 Gew.-%, auf Grundlage des Gesamtgewichts der Zusammensetzung, eines Phenat-Detergens,
(d) einen Reibungsmodifizierer, wobei der Reibungsmodifizierer in der Zusammensetzung zu 0,01 bis 2,0 Gew.-% vorliegt, auf Grundlage des Gesamtgewichts der Zusammensetzung, auf einer Grundlage der aktiven Bestandteile und wobei der Reibungsmodifizierer ein Fettsäureamid ist, und
(e) mehr als 0,05 Gew.-%, auf Grundlage des Gesamtgewichts der Zusammensetzung, eines schwefelhaltigen Abriebhemmers, wobei der geschwefelte Abriebhemmer geschwefeltes Olefin ist.

2. Getriebeölzusammensetzung gemäß Anspruch 1, wobei die dithiophosphorylierten Carboxylsäureverbindung 3-[[bis(2-Methylpropoxy)phosphinothioyl]thio]-2-methylpropanoesäure ist.

3. Getriebeölzusammensetzung gemäß Anspruch 1, zudem umfassend ein Dispergiermittel, wobei das Dispergiermittel ein basisches, stickstoffhaltiges, aschefreies Dispergiermittel ist, ausgewählt aus Hydrocarbyl-Bernsteinsäureimiden, Hydrocarbyl-Bernsteinsäureamiden; gemischten Estern/Amiden von Hydrocarbyl-substituierten Bernsteinsäuren, gebildet durch Reagieren eines Hydrocarbyl-substituierten Bernsteinsäure-Acylierungsmittels schrittweise oder mit einem Gemisch aus Alkoholen und Aminen, und/oder mit Aminoalkoholen; Mannich-Kondensationsprodukten von Hydrocarbyl-substituierten Phenolen, Formaldehyd und Polyaminen; und Amin-Dispergiermitteln, gebildet durch Reagieren von hochmolekularen aliphatischen oder alicyclischen Halogeniden mit Aminen, wir Polyalkylenpolyaminen, und Gemischen davon.

4. Getriebeölzusammensetzung gemäß Anspruch 1, wobei der geschwefelte Abriebhemmer geschwefeltes Isobutylen ist.

5. Getriebeölzusammensetzung gemäß Anspruch 1, zudem umfassend mindestens ein zweites Detergens, das sich vom Phenat-Detergens unterscheidet, wobei das zweite Detergens ausgewählt ist aus geschwefelten oder nicht geschwefelten Alkyl- oder Alkenylphenaten, alkyl- oder alkenylaromatischen Sulfonaten, borierten Sulfonaten, geschwefelten oder nicht geschwefelten Salzen von Multihydroxyalkyl- oder -alkenylaromatischen Verbindungen, Alkyl- oder Alkenylhydroxyaromatischen Sulfonaten, geschwefelten oder nicht geschwefelten Alkyl- oder Alkenylnaphthenaten, Metallsalzen von Carboxylsäuren, Metallsalzen einer Alkyl- oder Alkenylmultisäure, und chemischen und physischen Gemische davon, oder Metallsulfonate, -phenate, -salicylate, -phosphonate, -thiophosphonate, und Kombinationen davon.

6. Verfahren zum Schmieren des Getriebes einer Baumaschine, umfassend Schmieren des Getriebes mit einer zinkfreien Getriebeölzusammensetzung, wie in irgendeinem vorhergehenden Anspruch beansprucht.

## Revendications

1. Composition d'huile de transmission libre de zinc pour machines de construction comprenant :
(a) une quantité majeure d'une huile à viscosité lubrifiante,
(b) 0,025 à 1 pour cent en poids, à base du poids total de la composition, d'un composé acide carboxylique dithiophosphorylé,
(c) 0,05 à 5,0 pour cent en poids, à base du poids total de la composition, d'un détergent phénate,
(d) un modificateur de friction, où le modificateur de friction est présent dans la composition de 0,01 à 2,0 pour cent en poids, à base du poids total de la composition, à base d'actifs et où le modificateur de friction est un amide d'acide gras, et
(e) supérieur à 0,05 pour cent en poids, à base du poids total de la composition, d'un inhibiteur d'usure contenant du soufre, où l'inhibiteur d'usure sulfuré est une oléfine sulfurée.

2. Composition d'huile de transmission selon la revendication 1 dans laquelle le composé acide carboxylique dithiophosphorylé est l'acide 3-[[bis(2-méthylepropoxy)phosphinothioyl]thio]-2-méthylepropanoïque.

3. Composition d'huile de transmission selon la revendication 1 comprenant en plus une dispersant, dans laquelle le dispersant est un dispersant libre de cendres, basique et contenant de l'azote sélectionné parmi succinimides d'hydrocarbyle ; succinamides d'hydrocarbyle ; ester/amides mélangés d'acides succiniques substitués d'hydrocarbyle en réagissant un agent d'acylation succinique substitué d'hydrocarbyle en étapes ou avec un mélange d'alcools et d'amines, et/ou avec des aminoalcools ; des produits de condensation de Mannich de phénols, formaldéhyde et polyamines substitués d'hydrocarbyle ; et des dispersants d'amine formés en réagissant des halogénures aliphatiques ou ali-cycliques à poids moléculaire élevés, tels que des polyamines de polyalcylène, et leurs mélanges.

4. Composition d'huile de transmission selon la revendication 1, dans laquelle l'inhibiteur d'usure sulfuré est l'isobutylène sulfuré.

5. Composition d'huile de transmission selon la revendication 1 comprenant en plus un deuxième détergent différent du détergent phénate, où le deuxième détergent est sélectionné parmi des phénates d'alkyle ou d'alcényle sulfurés ou non sulfurés, des sulfonates aromatiques d'alkyle ou d'alcényle, des sulfonates borés, des sels métalliques sulfurés ou non sulfurés de composés aromatiques multi-hydroxyalkyle ou alcényle, des sulfonates hydroxyaromatiques d'alkyle ou d'alcényle, des naphthénates d'alkyle ou d'alcényle sulfurés ou non sulfurés, des sels métalliques d'acides carboxyliques, des sels métalliques d'un multia-cide d'alkyle ou d'alcényle, et de leurs mélanges chimiques et physiques, ou de sulfonates, phénates, salicylates, phosphonates, thiophosphonates de métal, et de leurs combinaisons.

6. Procédé pour lubrifier la transmission d'une machine de construction comprenant lubrifier la transmission avec une composition d'huile de transmission libre de zinc comme revendiquée dans quelconque revendication précédente.
